(19) **Europäisches Patentamt / European Patent Office / Office européen des brevets**

(11) **EP 3 066 925 B1**

(12) # FASCICULE DE BREVET EUROPEEN

(45) Date de publication et mention
de la délivrance du brevet:
**20.06.2018 Bulletin 2018/25**

(51) Int Cl.:
*A01N 65/03* *(2009.01)*    *A01N 37/44* *(2006.01)*
*A01P 21/00* *(2006.01)*

(21) Numéro de dépôt: **16159095.5**

(22) Date de dépôt: **08.03.2016**

(54) **COMPOSITION À USAGE AGRICOLE POUR STIMULER LE MÉTABOLISME AZOTÉ DES PLANTES COMPRENANT UN EXTRAIT D'ALGUE DU GENRE LAMINARIA ET DE L'ACIDE GLUTAMIQUE, PROCÉDÉS ET UTILISATIONS CORRESPONDANTS**

ZUSAMMENSETZUNG FÜR DEN LANDWIRTSCHAFTLICHEN EINSATZ ZUM STIMULIEREN DES STICKSTOFF-STOFFWECHSELS VON PFLANZEN, DIE EIN ALGENEXTRAKT VOM TYP LAMINARIA UND GLUTAMATSÄURE UMFASST, ENTSPRECHENDE VERFAHREN UND ENTSPRECHENDE ANWENDUNGEN

AGRICULTURAL COMPOSITION FOR STIMULATING THE NITROGEN METABOLISM OF PLANTS, COMPRISING A SEAWEED EXTRACT OF THE LAMINARIA GENUS AND GLUTAMIC ACID, CORRESPONDING METHODS AND USES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2015 FR 1552014**

(43) Date de publication de la demande:
**14.09.2016 Bulletin 2016/37**

(73) Titulaire: **BIO3G**
**22230 Merdrignac (FR)**

(72) Inventeurs:
• **GUILLERMOU, Marc**
**44250 Saint Brévin l'océan (FR)**
• **LEVIVIER, Sylvie**
**35310 Cintré (FR)**
• **KLARZYNSKI, Olivier**
**22400 Noyal (FR)**

• **LEPORT, M. Laurent**
**35132 Vezin-le-Coquet (FR)**
• **BOUCHEREAU, Alain**
**35260 Cancale (FR)**

(74) Mandataire: **Vidon Brevets & Stratégie**
**16B, rue de Jouanet**
**BP 90333**
**35703 Rennes Cedex 7 (FR)**

(56) Documents cités:
CA-A1- 2 708 742    CN-A- 103 859 354
CN-A- 104 055 058    GB-A- 2 408 045
KR-A- 20100 028 265

• **Marciel J Stadnik ET AL: "Algal polysaccharides as source of plant resistance inducers", Tropical Plant Pathology, 1 avril 2014 (2014-04-01), pages 111-118, XP055205439, Extrait de l'Internet: URL:http://www.scielo.br/scielo.php?script =sci_arttext&pid=S1982-56762014000200001**

EP 3 066 925 B1

**Description**

**1. Domaine de l'invention**

Le domaine de l'invention est celui des compositions destinées à un usage agricole, afin de stimuler la croissance des plantes, particulièrement pour la stimulation du métabolisme azoté des plantes.

Plus précisément, l'invention concerne une composition, concentrée ou prête à l'emploi sous forme diluée, comprenant des algues du genre *Laminaria* ainsi qu'un composé choisi dans le groupe comprenant l'acide glutamique, ses hydrates, ses énantiomères et/ou ses sels. L'invention concerne en outre un procédé de stimulation du métabolisme azoté des plantes cultivées et l'utilisation d'algues du genre *Laminaria* et d'un composé choisi parmi l'acide glutamique, ses hydrates, ses énantiomères et ses sels, ou d'une composition les comprenant, pour la stimulation du métabolisme azoté des plantes cultivées.

**2. Art antérieur**

L'Organisation pour l'Alimentation et l'Agriculture des Nations Unies, plus connue sous l'acronyme anglais FAO pour *Food and Agriculture Organization of the United Nations,* estime à 9,1 milliards la population humaine en 2050 (http://www.fao.org/fileadmin/templates/wsfs/docs/Issues_papers/Issues_papers_FR/C omment_nourrir_le_monde_en_2050.pdf). Selon ses estimations, l'augmentation de la population se ferait principalement dans les pays en voie de développement. Pour nourrir cette population, la production alimentaire devrait augmenter de 70% et la production de céréales devrait atteindre les 3 milliards de tonnes, contre 2 milliards aujourd'hui.

L'azote est un composant essentiel des protéines et un élément clé pour la valorisation des récoltes. Il est absorbé par les plantes sous forme de nitrates. Par conséquent, la fertilisation azotée est une étape indispensable dans l'agriculture moderne. Or, l'utilisation intensive d'engrais azotés a un impact environnemental sévère du fait notamment de la pollution des nappes phréatiques, de pluies acides dans certaines régions du monde, de la destruction de la faune et de la flore aquatique, et la multiplication des algues vertes (*Ulva lactuca, Ulva armoricana, Ulva rotundata*) dans les mers et les océans. Par ailleurs, la production même d'engrais azotés est une activité relativement polluante en elle-même.

Pour limiter l'impact environnement, des engrais naturels à base d'algues sont proposés. Les algues sont riches en acides aminés et en protéines. Les algues constituent par conséquent une source d'azote de choix. Une première démarche consiste en l'épandage d'algues vertes sur les champs. Une tonne d'algues équivaut en effet à 1,2 kg d'azote. De plus, cette démarche permet d'utiliser les algues vertes ramassées sur les plages. Une démarche alternative consiste à utiliser des compositions dites « biostimulantes » contenant des algues comme source d'azote. A la connaissance de la Demanderesse, il n'existe aucune composition permettant aux plantes cultivées d'optimiser ou maximiser l'assimilation et l'utilisation de l'azote qui leur est administré par les engrais.

**3. Objectifs de l'invention**

L'invention a notamment pour objectif de pallier ces inconvénients de l'art antérieur.

Plus précisément, un objectif de l'invention est de fournir, dans au moins un mode de réalisation, une composition, sous forme concentrée ou diluée, permettant de stimuler la croissance des plantes cultivées.

Un autre objectif de l'invention est de mettre en oeuvre, dans au moins un mode de réalisation, une composition, sous forme concentrée ou diluée, permettant de stimuler le métabolisme azoté des plantes cultivées.

Un autre objectif de l'invention est de mettre en oeuvre, dans au moins un mode de réalisation, une composition, sous forme concentrée ou diluée, permettant d'augmenter le rendement d'une récolte sans augmenter, voire en diminuant, la quantité d'engrais administrée.

Un autre objectif de l'invention est de mettre en oeuvre, dans au moins un mode de réalisation, une composition, sous forme concentrée ou diluée, permettant d'améliorer la qualité des récoltes sans augmenter, voire en diminuant, la quantité d'engrais administrée.

L'invention a encore pour objectif, dans au moins un mode de réalisation, de proposer un procédé de stimulation du métabolisme des plantes cultivées pour améliorer le rendement et la qualité des cultures agricoles, sans nécessiter d'augmentation de la quantité d'engrais épandue.

**4. Exposé de l'invention**

Ces objectifs, ainsi que d'autres qui apparaîtront par la suite, sont atteints à l'aide d'une composition concentrée destinée à un usage agricole, pour stimuler le métabolisme azoté des plantes cultivées.

Selon l'invention, une telle composition concentrée comprend :

- un composé choisi dans le groupe comprenant l'acide glutamique, un de ses hydrates, un de ses énantiomères, un de ses sels, et leurs combinaisons ;
- de l'algue du genre *Laminaria;*

ladite algue du genre *Laminaria* et ledit composé étant présents respectivement dans un ratio massique compris entre 11.25:1 et 45:1. On entend par « hydrate » d'une molécule l'union d'eau et de ladite molécule, par exemple pour un sel cristallisé.

On entend par « énantiomère » les formes stéréo-isomères non superposables d'une molécule présentant un carbone asymétrique.

On entend par « sel » un composé chimique formé d'un anion et d'un cation sans charge nette. Ici, l'acide glutamique forme un anion (le glutamate) qui peut former un sel en se complexant avec un cation choisi parmi l'ammonium, le calcium, le fer, le magnésium, le potassium, le pyridinium, le sodium, le lithium, l'ammonium quaternaire. De préférence, le sel d'acide glutamique est le glutamate monosodique ou monosodium glutamate.

Le ratio massique se calcule de la manière suivante :

$$\text{ratio massique} = \text{masse d'algues } Laminaria/\text{masse de principe actif}$$

Ainsi, l'invention repose sur une approche tout à fait nouvelle et originale de proposer une composition permettant de stimuler le métabolisme azoté. Cette stimulation permet notamment d'améliorer la qualité et le rendement des plantes cultivées, sans pour autant augmenter la quantité d'engrais administrée aux cultures, voire en diminuant la quantité d'engrais administrée. La composition selon l'invention ne constitue en aucun cas un palliatif ou un complément aux sources d'azote traditionnelles tels que les engrais de synthèse chimique ou d'origine naturelle. En effet, la quantité d'azote apportée par la composition selon l'invention est négligeable (inférieure à environ 0,01%), la composition n'étant pas alors une source d'azote suffisante pour la culture de plantes.

Il est important de souligner ici que le principe de l'invention n'est pas de concevoir une composition qui se limiterait à apporter aux plantes de l'azote sous une forme différente des engrais. Le principe de l'invention repose sur la fourniture d'une composition - sous forme concentrée ou diluée - comprenant une combinaison d'ingrédients sélectionnés pour stimuler notamment l'assimilation et la translocalisation de l'azote des racines vers les cellules végétales.

En effet, les inventeurs ont découvert de manière surprenante que la combinaison d'une algue appartenant au genre *Laminaria* et d'un composé choisi parmi l'acide glutamique, un de ses hydrates, un de ses énantiomères, un de ses sels, et leurs combinaisons, permettait de stimuler le métabolisme azoté des plantes cultivées.

Par « stimulation du métabolisme azoté », on entend notamment une augmentation de l'assimilation de l'azote par ladite plante, une augmentation de la mise en réserve de l'azote par ladite plante, et leurs combinaisons. Autrement dit, les cultures traitées par la composition selon l'invention présentent soit un meilleur rendement à quantité d'engrais égal ; soit les plantes traitées par la composition selon l'invention ne présentent pas ou peu de carences du fait d'une administration d'engrais trop réduite. En d'autres termes, l'expression « stimulation du métabolisme azoté » dans la présente demande signifie que, à quantité d'azote égale, les plantes cultivées traitées par la composition selon l'invention sont capables :

- d'une part, d'absorber davantage d'azote par rapport à une plante non traitée ; et
- d'autre part, de translocaliser davantage, par rapport à une plante non traitée, l'azote assimilé par les racines aux cellules végétales ayant besoin de cet azote, et notamment aux graines pour la synthèse de protéines.

Il est établi que les cellules végétales réagissent en fonction de stimuli externes. Toutefois, aucune méthode d'agriculture n'est basée sur ce principe. En effet, l'essentiel des stratégies de fertilisation azotée restent basées sur des quantités fixes d'azote à apporter aux cultures, sans prendre en compte la dimension interne de la plante. Les inventeurs ont découvert que certains mécanismes biologiques résultant de différentes voies métaboliques ne peuvent être activés que grâce à des combinaisons particulières de principes actifs dans des proportions particulières. Les inventeurs ont donc mis au point une composition à usage agricole permettant de stimuler le métabolisme azoté des plantes cultivées, grâce à la combinaison d'un extrait d'algues du genre *Laminaria* et un composé choisi dans le groupe comprenant l'acide glutamique, un de ses hydrates, un de ses énantiomères, un de ses sels, et leurs combinaisons.

En d'autres termes, la composition selon l'invention permet aux plantes cultivées de présenter un taux de protéines plus élevé dans les graines par exemple, sans avoir à augmenter la quantité d'engrais et de nitrates dans le sol. Ainsi, les plantes cultivées en présence de la composition selon l'invention présentent une meilleure qualité, sans avoir à augmenter la quantité de nitrates dans le sol. Par conséquent, elles sont plus facilement valorisables sur le plan commercial et nutritionnel.

De manière tout aussi intéressante, les inventeurs ont constaté que la composition selon l'invention permettait de réduire la quantité d'engrais administrée tout en conservant un taux de protéines et un rendement de culture équivalents. Autrement dit, la composition selon l'invention permet de cultiver des plantes en réduisant la quantité d'engrais sans altérer la qualité des cultures ni réduire le rendement de culture.

La composition n'est pas une composition fertilisante. Elle ne permet pas d'apporter la quantité nécessaire d'azote pour fertiliser une plante et permettre sa croissance (environ 0,01%).

Les inventeurs ont en effet découvert que la combinaison particulière de principes actifs algues *Laminaria* + acide glutamique ou dérivé permettait non pas d'agir comme un engrais, mais d'agir sur les voies métaboliques du végétal afin de « forcer » son absorption et son utilisation.

De tels effets ne sont pas dus à la quantité d'azote présente dans la composition. Outre le fait que la quantité d'azote est négligeable, l'azote présent dans la composition se trouve notamment sous forme de protéines: il ne s'agit donc pas d'azote libre tel qu'habituellement utilisé dans les fertilisants mais d'azote lié. Or les formes liées de l'azote sont beaucoup moins efficaces que les formes libres pour la nutrition des cultures. Par conséquent, la composition selon l'invention ne peut agir comme un fertilisant.

Par conséquent, la composition selon l'invention permet de mettre en oeuvre une agriculture efficace tout en étant plus respectueuse de l'environnement.

Ledit composé - choisi dans le groupe comprenant l'acide glutamique, ses hydrates, ses énantiomères et/ou ses sels - et les algues *Laminaria* sont présents dans les compositions selon l'invention en quantité physiologiquement efficace, c'est à dire lorsque la composition (prête à l'emploi ou après dilution) est appliquée sur les plantes à traiter.

Avantageusement, ladite algue du genre *Laminaria* et ledit composé sont présents respectivement dans un ratio massique compris entre environ 18:1 et environ 38,25:1 ; alternativement dans un ratio massique égal à environ 45:1,5. Les inventeurs ont en effet constaté que ces ratios massiques particuliers permettaient une meilleure efficacité de la stimulation du métabolisme azoté.

Les inventeurs ont en effet constaté que ces ratios massiques spécifiques permettaient les meilleurs résultats et une meilleure stimulation du métabolisme azoté des plantes cultivées. Comme cela est démontré par les travaux des inventeurs, la composition présente une efficacité optimale pour ces valeurs de ratios massiques particulières, et une efficacité maximale lorsque le ratio massique algue *Laminaria*/composé est environ égal à 45:1,5. Il est à noter que le ratio 45:1,5 peut être approximé par la valeur 30:1.

Dans un mode de réalisation intéressant de l'invention, les algues du genre *Laminaria* peuvent être incorporées à la composition selon l'invention sous forme d'une solution d'algues *Laminaria,* de préférence une solution aqueuse d'algues *Laminaria.*

Par exemple, une telle solution aqueuse peut comprendre environ 40% à 50% en poids d'algues du genre *Laminaria* et le reste étant en poids d'eau, par rapport au poids total de la solution aqueuse. Les algues du genre *Laminaria* peuvent être broyées, hachées, découpées ou mixées dans l'eau pour former une solution aqueuse d'algues du genre *Laminaria.*

Dans un mode de réalisation particulièrement intéressant, les algues du genre *Laminaria* sont incorporées à la composition selon l'invention sous forme d'une solution aqueuse d'algues comprenant environ 45% en poids d'algues et 55% en poids d'eau, par rapport au poids total de la solution aqueuse.

Une telle solution aqueuse d'algues *Laminaria* peut être préparée par broyage des algues du genre *Laminaria* dans de l'eau, après lavage et triage des algues. L'eau est ensuite ajoutée jusqu'à atteindre 45% en poids d'extrait d'algues primaire et 55% en poids d'eau, par rapport au poids total de la solution aqueuse. Le mélange est ensuite transféré dans une cuve de 1000L pour y être broyé avec un broyeur du type Comitrol. Une fois broyées, de l'acide citrique est ajouté en raison de 3% (p/v) puis homogénéisé avant conditionnement et utilisation finale.

Ainsi, lorsque les algues sont incorporées à la composition selon l'invention sous forme de solution aqueuse, lesdites algues du genre *Laminaria* et ledit composé sont présents respectivement dans un ratio massique compris entre environ 10:1 et environ 150:1, de préférence environ 100:1,5. Avantageusement, dans une telle composition diluée, prête à l'emploi, lesdites algues *Laminaria* en solution aqueuse et ledit composé sont présents respectivement dans un ratio massique compris environ entre 25:1 et environ 100:1, de manière davantage préférée entre environ 40:1 et environ 85:1 et de manière préférée entre toutes un ratio massique environ égal à environ 100:1,5.

De manière particulièrement avantageuse, la composition concentrée selon l'invention comprend une proportion massique dudit composé comprise entre environ 0,01% et environ 20% ; alternativement entre environ 0,1% et environ 10% ; alternativement entre environ 0,5% et environ 5% ; et alternativement d'environ 1,5% par rapport au poids total de la composition concentrée.

Avantageusement, ledit composé est choisi parmi l'acide glutamique D, l'acide glutamique L, le glutamate monosodique, ou leur mélanges ; alternativement le glutamate monosodique, l'acide glutamique ou leur mélanges ; alternativement l'acide glutamique. Le monosodium glutamate et le glutamate monosodique font référence à la même molécule.

Avantageusement, la composition concentrée selon l'invention comprend une proportion massique desdites algues du genre *Laminaria* comprise entre environ 4,5% et environ 50% ; alternativement entre environ 15% et environ 50% ; alternativement entre environ 25% et environ 50% ; alternativement entre environ 35% et environ 50%; alternativement entre environ 40% et 45% ; alternativement d'environ 42,2% par rapport au poids total de la composition concentrée. Les inventeurs ont en effet constaté que ces proportions minutieusement sélectionnées permettent une bonne efficacité de la composition selon l'invention. Elle permet en outre d'être rentable sur le plan économique.

Les inventeurs ont constaté que ces proportions particulières d'algues *Laminaria* et de composé permettaient d'agir efficacement sur les voies métaboliques végétales afin de stimuler l'assimilation, la translocation et l'utilisation de l'azote du sol.

Avantageusement, l'algue du genre *Laminaria* est choisie parmi les espèces *Laminaria abyssali, Laminaria agardhii, Laminaria andersonii, Laminaria angustata, Laminaria belvisii, Laminaria biruncinata, Laminaria bongardiana, Laminaria bracteata, Laminaria brasiliensis, Laminaria brongardiana, Laminaria bullata, Laminaria cichorioides, Laminaria complanata, Laminaria conica, Laminaria coriacea, Laminaria cornea, Laminaria crassifolia, Laminaria diabolica, Laminaria digitata, Laminaria discolor, Laminaria ephemera, Laminaria farlowii, Laminaria fissilis, Laminaria flagellum, Laminaria flexicaulis, Laminaria gunneri, Laminaria hyperborea, Laminaria japonica, Laminaria lamourouxii, Laminaria leptopoda, Laminaria longicruris, Laminaria longipedalis, Laminaria longipes, Laminaria longissima, Laminaria lyrata, Laminaria nigripes, Laminaria ochotensis, Laminaria ochroleuca, Laminaria ophiura, Laminaria pallida, Laminaria palmata, Laminaria papyrina, Laminaria platymeris, Laminaria polyphylla, Laminaria pseudodigitata, Laminaria punctata, Laminaria religosa, Laminaria remotifolia, Laminaria repens, Laminaria rodriguezi, Laminaria ruprechtiana, Laminaria ruprechtii, Laminaria saccharina, Laminaria sachalinensis, Laminaria sarniensis, Laminaria setchellii, Laminaria sinclairii, Laminaria solidungula, Laminaria taeniata, Laminaria turneri, Laminaria viridissima, Laminaria vittata, Laminaria yendoana, Laminaria yezoensis* ou leurs combinaisons; alternativement l'algue est choisie parmi les espèces *Laminaria digitata, Laminaria hyperborea, Laminaria japonica, Laminaria saccharina* ou leurs combinaisons ; alternativement l'algue appartient à l'espèce *Laminaria digitata.*

Dans un mode de réalisation avantageux, la composition selon l'invention comprend en outre au moins un agent conservateur. En ce cas, ledit agent conservateur est choisi parmi les sorbates, les parabens ou leur mélange. De préférence, ledit conservateur est choisi parmi le sorbate de potassium, le méthylparaben ou leurs mélanges. Avantageusement, ledit conservateur est compris entre environ 0,02% et environ 2%, de préférence environ 0,2%. La présence de conservateur permet d'éviter la dégradation de la composition et le développement de micro-organismes.

Dans un mode de réalisation de l'invention, la composition concentrée selon l'invention comprend en outre un adjuvant ; alternativement un adjuvant choisi parmi un agent gélifiant, un agent dispersant, un tensio-actif ou leur combinaisons.

De manière intéressante, ledit adjuvant est un agent texturant tel que la xanthane, la silicone ou leur combinaison. Ces adjuvants permettent de formuler une composition facile d'utilisation.

Dans un mode de réalisation, ledit tensio-actif est choisi parmi un alcool gras polyethoxylé, un sucrolipide, une huile végétale polyethoxylée, un ester méthylique d'huile végétale polyethoxylée, un acide gras polyethoxylé, un silicone hydraté, un ester de sorbitol, un ester de sorbitol polyéthoxylé et leur combinaisons.

Selon l'invention, le tensioactif est compris entre environ 0,1% et environ 10%, de préférence environ 1,5% par rapport au poids total de la composition.

L'invention concerne en outre une composition prête à l'emploi, pour un usage agricole, pour stimuler le métabolisme azoté des plantes cultivées, ladite composition comprenant:

- environ 0.0001% à environ 1% en poids d'un composé choisi dans le groupe comprenant l'acide glutamique, un de ses hydrates, un de ses énantiomères, un de ses sels, et leurs combinaisons par rapport au poids total de la composition prête à l'emploi ;
- environ 0.045% à environ 5% en poids d'algues du genre *Laminaria* par rapport au poids total de la composition prête à l'emploi;
- au moins un agent conservateur,

lesdites algues du genre *Laminaria* et ledit composé étant présents respectivement dans un ratio massique compris entre 11.25:1 et 45:1. Dans un mode de réalisation avantageux de la composition prête à l'emploi, ledit ratio massique algues *Laminaria*/composé est compris entre environ 18:1 à environ 38,25:1, alternativement environ 45:1,5. Il est à noter que le ratio 45:1,5 peut être approximé par la valeur 30:1.

Dans un mode de réalisation avantageux, la composition prête à l'emploi selon l'invention comprend une proportion massique dudit composé comprise entre environ 0,0001% et environ 1% ; alternativement entre environ 0,001% et environ 0,1% ; alternativement entre 0,005% et environ 0,05% ; et alternativement d'environ 0,015% par rapport au poids total de la composition prête à l'emploi.

Dans un mode de réalisation avantageux, la composition prête à l'emploi selon l'invention comprend une proportion massique desdites algues *Laminaria* comprise entre environ 0,05% et environ 5% ; alternativement entre environ 0,15% et environ 0,50% ; alternativement entre environ 0,25% et environ 0,50% ; alternativement entre environ 0,35% et environ 0,50% ; alternativement entre environ 0,35% et environ 0,45% ; et alternativement d'environ 0,45% par rapport au poids total de la composition prête à l'emploi.

La composition prête à l'emploi peut comprendre lesdits composés choisis dans le groupe comprenant l'acide glutamique, ses hydrates, ses énantiomères, ses sels ; lesdites algues préférées ; et lesdits composés additionnels tel que définis ci-avant.

De même que la composition concentrée, la composition prête à l'emploi ne constitue pas une source d'azote alternative aux engrais conventionnels. En effet, l'azote présent dans la composition ne se trouve pas sous une forme utilisable par les plantes. Par ailleurs, sa proportion est bien trop faible pour constituer un fertilisant. En revanche, les proportions particulières d'algues du genre *Laminaria* et du composé choisi parmi l'acide glutamique ou ses dérivés permettent d'activer les voies métaboliques végétales impliquées dans le métabolisme de l'azote, notamment en agissant sur la régulation des gènes contrôlant ces voies métaboliques.

L'invention a également pour objet un procédé d'obtention d'une composition diluée comprenant les étapes suivantes :

- fourniture d'une composition concentrée telle que définie ci-avant;
- fourniture d'un milieu aqueux; et
- dilution de ladite composition concentrée dans ledit milieu aqueux dans un ratio de dilution compris entre environ 0,05% et environ 10%, alternativement entre environ 0,1% et environ 4%, alternativement entre environ 0,4% et environ 2% ; et alternativement d'environ 1% par rapport au volume total de la composition diluée.

Le procédé selon l'invention permet donc de préparer de manière extemporanée une composition diluée, prête à être appliquée notamment par pulvérisation sur les cultures à partir d'un faible volume de composition concentrée selon l'invention.

Lorsque la composition concentrée est diluée pour être appliquée sur les plantes à traiter, il est à noter que lesdites algues *Laminaria* et ledit composé sont présents respectivement dans un ratio massique compris entre 11.25:1 et 45:1, de préférence environ 45:1,5. Avantageusement, dans une telle composition diluée, prête à l'emploi, l'extrait d'algues *Laminaria* et ledit composé sont présents respectivement dans un ratio massique compris environ entre 11,25:1 et environ 45:1, de manière davantage préférée entre environ 18:1 et environ 38,25:1 et de manière préférée entre toutes un ratio massique environ égal à environ 45:1,5.

Un autre objet de l'invention concerne un procédé de traitement des plantes cultivées, pour stimuler leur métabolisme azoté, comprenant les étapes suivantes :

- fourniture d'une composition concentrée telle que définie ci-avant ;
- dilution de ladite composition concentrée dans un milieu aqueux selon un taux de dilution compris entre environ 0,05% et environ 10%, alternativement entre environ 0,1% et environ 4% ; alternativement entre environ 0,4% et environ 2% ; et alternativement environ 1% par rapport au volume total de la composition diluée ;
- pulvérisation de ladite composition diluée sur lesdites plantes par voie aérienne.

Les plages de dilution permettent d'obtenir une concentration efficace dans la solution pulvérisée. Ces concentrations en algues *Laminaria* et en ledit composé - choisi dans le groupe comprenant l'acide glutamique, ses hydrates, ses énantiomères et/ou ses sels - permettent de stimuler efficacement le métabolisme azoté des plantes cultivées.

Différents modes de préparation de la composition diluée à partir de la composition concentrée sont possibles. Le premier mode consiste à diluer directement un volume d'environ 0,1 L à environ 10 L, de préférence environ 2 L, de composition concentrée dans une cuve comprenant entre 50 L et 1000 L d'eau.

Par exemple, il est usuel de pulvériser entre :

- 100-1000 L/ha pour les vignes et l'arboriculture (arbres fruitiers par exemple) ;
- 50-300 L/ha les grandes cultures (blé, colza, maïs par exemple) et certaines cultures spécialisées (fraises, tomates par exemple).

Ainsi, l'agriculteur peut préparer la composition prête à être appliquée notamment par pulvérisation sur ses cultures en fonction du mode de culture adoptée.

Dans un mode de réalisation intéressant, les plantes à traiter sont les plantes choisies parmi les céréales à paille, le maïs, le riz, le colza, la pomme de terre, la betterave, le tournesol, la vigne, les arbres fruitiers, les légumes feuilles, fruits et racines, une prairie, du gazon ; préférentiellement les plantes choisies parmi le blé et le colza.

On inclut dans le groupe « céréales à paille » notamment le blé, l'orge, l'avoine, le triticale et le seigle. On entend par « légumes feuilles » notamment les légumes dont la partie consommée correspond à la feuille de la plante. A titre d'exemples de légumes feuilles, on peut citer l'endive, l'épinard, la blette, les choux ou crucifères, la salade comme la laitue, la roquette, la mâche, la scarole, la laitue Iceberg, la feuille de chêne, le cresson, l'oseille, le ndolé, etc. On entend par « légumes racines » notamment les carottes, le radis, le panais, le topinambour, le poireau, le navet, le céleri, les oignons, l'ail etc.

De préférence, l'étape de pulvérisation est effectuée aux stades 29, 30 et 61 selon l'échelle BBCH lorsque la plante à traiter est le blé. Alternativement, l'étape de pulvérisation est effectuée au stade 55 selon l'échelle BBCH lorsque la plante à traiter est le colza. L'échelle BBCH (pour *Biologische Bundesanstalt für Land und Forstwirtschaft*) est une échelle de notation phénologique (Stades phénologiques des monocotylédones et dicotylédones cultivées. U. Meier. Blackwell Wissenschafts-Verlag Berlin. 2001). L'échelle permet d'identifier très précisément chaque stade de développement du cycle annuel de la plante. Des échelles de notation phénologique ont été développées pour chaque grande famille de plantes (plantes pérennes, racines, légumes à feuilles, etc.) ainsi que pour des plantes cultivées d'intérêt comme la betterave, la pomme de terre, le blé, le colza, etc.

Un autre aspect de l'invention concerne l'utilisation (1) d'algues du genre *Laminaria* et (2) d'acide glutamique, d'un de ses hydrates, d'un de ses énantiomères, d'un de ses sels, et de leurs combinaisons, ou d'une composition les comprenant, pour stimuler le métabolisme azoté des plantes cultivées.

Comme indiqué ci-avant, les inventeurs ont découvert que la combinaison particulière d'algues *Laminaria* et d'un composé choisi parmi l'acide glutamique, et ses dérivés permettaient de stimuler efficacement le métabolisme azoté. En effet, les inventeurs ont constaté que l'association de ces deux principes actifs particuliers est nécessaire pour favoriser et optimiser l'assimilation de l'azote contenu dans la terre et les engrais par les racines. Ils ont également constaté que la quantité de protéines présentes dans les graines des plantes cultivées en présence de la composition selon l'invention était plus importante que dans les plantes cultivées avec un engrais seul.

Avantageusement, la stimulation du métabolisme azoté des plantes cultivées comprend notamment une augmentation de l'assimilation de l'azote par ladite plante, une augmentation de la mise en réserve de l'azote par ladite plante, et leurs combinaisons.

A titre de précision, l'augmentation du rendement de récolte comprend notamment une amélioration du tallage, une amélioration du développement végétatif, une augmentation du rendement en grains, une augmentation du rendement en fruits, et leurs combinaisons. Les augmentations sont calculées en référence à la même plante, cultivée dans les mêmes conditions avec ou sans la composition (concentrée ou diluée) selon l'invention.

Dans un mode de réalisation intéressant, lesdites plantes sont des plantes, préférentiellement le blé et le colza. Les inventeurs ont constaté une excellente efficacité de la composition selon l'invention sur ces deux plantes.

L'invention couvre en outre l'utilisation d'une composition concentrée telle que définie ci-avant, qui à l'état prêt à l'utilisation, diluée dans un milieu aqueux, est destinée à augmenter le rendement de récolte. La dilution de la composition concentrée peut avoir lieu soit extemporanément, c'est à dire au moment de la pulvérisation ou moins de 24h, de préférence moins de 12h, de manière davantage préférée moins de 6h avant la pulvérisation.

Avantageusement, ladite composition concentrée est diluée dans ledit milieu aqueux à un taux de dilution compris entre environ 0,05% et environ 10%, alternativement entre environ 0,1% et environ 4% ; alternativement entre environ 0,4% et environ 2% ; et alternativement environ 1% par rapport au volume total de la composition diluée. La composition selon l'invention présente une efficacité optimale sur la stimulation du métabolisme azoté des plantes pour ses gammes de dilution. La composition selon l'invention est donc puissante car il suffit de peu de produit concentré pour pouvoir traiter efficacement des cultures agricoles.

Avantageusement, la stimulation du métabolisme azoté des plantes cultivées comprend une augmentation de l'assimilation de l'azote par ladite plante, une augmentation de la mise en réserve de l'azote par ladite plante, et leurs combinaisons.

Dans un mode de réalisation, l'augmentation du rendement de récolte comprend notamment une amélioration du tallage, une amélioration du développement végétatif, une augmentation du rendement en grains, une augmentation du rendement en fruits, et leurs combinaisons.

Dans un mode de réalisation intéressant, lesdites plantes sont préférentiellement le blé et le colza.

### 5. Figure

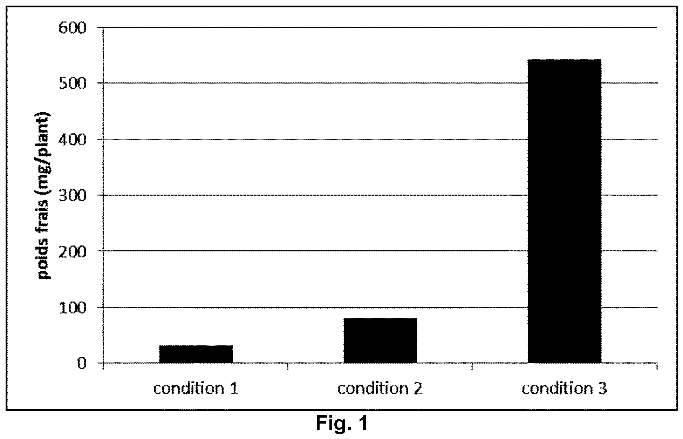

D'autres caractéristiques et avantages de l'invention apparaîtront plus clairement à la lecture de la description suivante d'un mode de réalisation préférentiel, donné à titre de simple exemple illustratif et non limitatif, et de la figure 1 qui présente un histogramme représentant les résultats des essais comparatifs avec différentes formulations de la composition selon l'invention.

### 6. Description d'un mode de réalisation de l'invention

Le principe général de l'invention repose sur l'association de deux principes actifs sélectionnés pour leur action stimulante sur le métabolisme azoté. En effet, la combinaison d'algues appartenant au genre *Laminaria* et d'un composé - choisi dans le groupe comprenant l'acide glutamique, ses hydrates, ses énantiomères et/ou ses sels - permet notamment d'améliorer l'assimilation de l'azote par les racines et l'utilisation de cet azote par la plante. Il est à préciser que la composition selon l'invention, qu'elle soit sous forme concentrée ou diluée, ne constitue pas une source d'azote alternative aux engrais. En effet, la quantité d'azote apportée par la composition selon l'invention est négligeable (inférieure à 0,01%). La présente invention n'a donc pas pour objectif ou pour effet de fournir une source d'azote naturelle et respectueuse de l'environnement. La composition selon l'invention n'est pas une source d'azote ni un fertilisant. Le principe de l'invention repose sur le fait que tout l'azote administré aux plantes n'est pas consommé par ces dernières. Le principe qui sous-tend l'invention consiste à « forcer » la plante à assimiler le maximum d'azote possible. En d'autres termes, le principe de l'invention réside dans le choix de deux principes actifs particulier, des algues du genre *Laminaria* et ledit composé - choisi dans le groupe comprenant l'acide glutamique, ses hydrates, ses énantiomères et/ou ses sels -, pour stimuler le métabolisme azoté de la plante. C'est à dire qu'en appliquant une combinaison de ces deux principes actifs, de préférence dans des proportions et/ou ratios donnés, les plantes assimilent davantage l'azote apporté par les fertilisants. Cette stimulation s'observe par divers signes significatifs comme une augmentation du nombre de feuilles, une augmentation de la quantité de protéines dans les graines ou une augmentation du rendement de récolte.

De tels effets ne peuvent être dus à la présence d'azote dans la composition pour deux raisons :

1) l'azote présent dans la composition se trouve soit sous forme d'acide aminé ou un de ses dérivés, soit sous forme de peptide. L'azote est donc lié et n'est donc pas disponible pour le végétal ; et
2) la quantité d'azote est trop faible pour agir comme un fertilisant (environ 0,01% en poids).

Il semblerait cependant que la combinaison particulière de principes actifs, dans les ratios précités, permette de modifier la régulation des gènes impliqués dans le métabolisme végétal de l'azote. Ainsi, la composition selon l'invention permet de doper les performances d'un fertilisant ou, le cas échéant, de pallier son insuffisance.

6.1. Exemple d'une composition concentrée selon l'invention

La composition selon l'invention est préparée par mélange des ingrédients liquides dans un premier temps. Puis, dans un deuxième temps, les ingrédients secs sont ajoutés au mélange liquide. L'ensemble est mélangé à grande vitesse pendant 15-20 min puis à faible vitesse pendant 2h. Au terme de ce délai, l'homogénéité du mélange est contrôlée visuellement par l'opérateur. Le mélange homogène est ensuite filtré par filtration en boucle pendant 2h avant d'être envoyé dans une cuve brassée.

**Tableau 1 - Exemple de composition concentrée selon l'invention**

| Ingrédient | Fonction | N°CAS | % de l'ingrédient permettant une activité | % préféré d'ingrédient dans la composition |
|---|---|---|---|---|
| Algues *Laminaria digitata* en solution aqueuse (45% p/p) | Principe actif | / | 10-99 | 93,8 |
| Glutamate monosodiq ue/ monosodi um glutamate/ Acide glutamique | Principe actif | 142-47-2/6106-04-3/617-65-2 | 0,01-20 | 1,5 |
| Huile de ricin ethoxylée | Agent mouillant | 61791-12-6 | 0,1-10 | 3 |
| Siloxane modifié polyester | Agent mouillant | / | 0,1-10 | 1,5 |
| Sorbate de potassium | Conservateur | 24634-615 | 0,01-1 | 0,1 |
| Methylparaben sodé | Conservateur | 5026-62-0 | 0,01-1 | 0,1 |

Dans ce mode de réalisation, les algues *Laminaria digitata* sont en solution aqueuse comprenant 45% en poids d'algues et 55% en poids d'eau, par rapport au poids total de cette solution aqueuse d'algues. La solution aqueuse est préparée par une extraction aqueuse et broyage des algues entières. Le pH de cette composition est compris entre 3,5 et 5. Le pourcentage massique de matière sèche est compris entre 5% et 15%. Le pourcentage de matière organique est compris entre 5% et 15%. L'acide glutamique est compris entre 5 g/kg et 50 g/kg de composition. Il est à noter que l'acide glutamique peut être commercialisé sous les numéros CAS (Chemical Abstract Service) suivants : 617-65-2 ou 6893-26-1 ou 56-86-0.

6.2. Exemple d'une composition prête à l'emploi selon l'invention

La composition selon l'invention est préparée par mélange des ingrédients dans les proportions massiques spécifiées au tableau 2 ci-dessous.

**Tableau 2 - Exemple de composition prêt à l'emploi selon l'invention**

| Ingrédient | Fonction | N°CAS | % de l'ingrédient permettant une activité | % préféré d'ingrédient dans la composition |
|---|---|---|---|---|
| Algues *Laminaria digitata* en solution aqueuse (45%p/p) | Principe actif | / | 0,1-10 | 1 |
| Glutamate monosodiq ue/ monosodi um glutamate/ Acide glutamique | Principe actif | 142-47-2/6106-04-3/617-65-2 | 0,0001-1 | 0,015 |
| Huile de ricin ethoxylée | Agent mouillant | 61791-12-6 | 0,01-0,2 | 0,1 |
| Siloxane modifié polyester | Agent mouillant | / | 0,001-1 | 0,015 |
| Sorbate de potassium | Conservateur | 24634-615 | 0,01-1 | 0,1 |
| Methylparaben sodé | Conservateur | 5026-62-0 | 0,01-1 | 0,1 |
| Silice pyrogénée hydrophylique | Agent texturant | 112945-52-5 | 1-10 | 6 |
| Eau | Solvant | / | Qsp 100% | 92,65 |

Dans ce mode de réalisation, l'extrait d'algues *Laminaria digitata* est une solution aqueuse comprenant 45% en poids d'algues et 55% en poids d'eau. Cette solution est préparée par une extraction aqueuse et broyage des algues entières. Le pH de cette composition est compris entre 3 et 7. Le pourcentage massique de matière sèche est compris entre 0,5% et 15%. Le pourcentage de matière organique est compris entre 0,1% et 15%. L'acide glutamique est compris entre 0,001 g/kg et 5 g/kg de composition. Il est à noter que l'acide glutamique peut être commercialisé sous les numéros CAS (Chemical Abstract Service) suivants : 617-65-2 ou 6893-26-1 ou 56-86-0.

6.3. Premier essai comparatif d'efficacité de la composition selon l'invention en milieu contrôlé.

Des essais ont été menés pour déterminer l'efficacité de la composition concentrée selon l'invention. Les essais ont été menés en France, sur un substrat Faliénor sans prémix, dépourvu d'azote (concentration en azote = 0). La plante cultivée est du blé tendre d'hiver (variété Premio). Les plants ont été cultivés en pot à une densité de 100 plants/m2. Les produits sont appliqués au débit du tallage, au stade épis = 1 cm et au début de la floraison du blé. Chaque produit est appliqué en un volume de 250 ml pour 5 plants et par condition. Dans chaque condition, les adjuvants Deschofix CO125 et BYK 349 sont ajoutés respectivement aux doses finales de 0,3 g/L et 0,225 g/L. Une solution nutritive sans azote (engrais liquide Plantin Liquiplant) est apportée goutte à goutte en continu avec l'arrosage. L'azote est apporté par une solution d'ammonitrate à 28% d'azote. Une unité d'azote correspond à 1kg d'azote/hectare (kg/ha).
Les conditions testées sont résumées dans le tableau ci-dessous :

**Tableau 3- Conditions testées**

| Condition | Concentration en glutamate monosodique dans les produits testés (% massique) | Concentration en extrait d'algues *Laminaria* dans les produits testés (% massique) | Apport en azote | Application des produits testés |
|---|---|---|---|---|
| Témoin N100 | 0 | 0 | 210 Unités en 4 apports = dose complète de fertilisation azotée | après repiquage puis en même temps que l'apport des produits testés |
| Témoin N70 | 0 | 0 | 147 Unités en 4 apports = dose limitante de fertilisation | après repiquage puis en même temps que l'apport des |
| | | | | produits testés |
| T1 | 2 g/L | 1% | azotée | 3 applications A : A1 = début du tallage ; A2 = 1$^{er}$ noeud ; A3 = F1 (avant épiaison). |
| T5 | 5 g/L | 1% | | |
| T10 | 10 g/L | 1% | | |

Après une période de 4 mois après semis, la masse totale de plante et le rendement sec des grains sont mesurés pour chaque condition. Les données sont soumises à une analyse de variance. Les conditions sont comparées entre elles par un test de Newman et Keuls. Les résultats par rapport à chaque condition témoin N100 et N70 sont résumés dans les tableaux ci dessous :

**Tableau 4 - Résultats des essais comparatifs en milieu contrôlé sur le rendement en paille**

| Condition | Rendement en paille (en g/plant) | |
|---|---|---|
| | /N100 | /N70 |
| N100 | 19,5 | 106,3 |
| N70 | 94,1 | 18,4 |
| T1 | **115,0\*** | **122,3\*** |

Les valeurs indiquées dans le tableau pour les conditions N70 et N100 correspondent aux valeurs brutes mesurées. Pour les conditions T1, T5 et T10, les valeurs indiquées correspondent aux valeurs relatives par rapport à chaque condition témoin N70 (noté /N70) ou N100 (noté /N100). L'astérisque indique les résultats statistiquement significatifs (p<0,05).

**Tableau 5 - Résultats des essais comparatifs en milieu contrôlé sur le rendement sec de grains**

| Condition | Rendement sec de grains (en g/plant) | |
|---|---|---|
| | /N100 | /N70 |
| N100 | 11,8 | 124,9 |
| N70 | **80,1\*** | 9,5 |
| T1 | 91,9 | **114,8\*** |
| T5 | 95,9 | 119,8 |
| T10 | 92,4 | 115,4 |

Les valeurs indiquées dans le tableau pour les conditions N70 et N100 correspondent aux valeurs brutes mesurées. Pour les conditions T1, T5 et T10, les valeurs indiquées correspondent aux valeurs relatives par rapport à chaque condition témoin N70 ou N100. L'astérisque indique les résultats statistiquement significatifs (p<0,05). Comme il est possible de l'observer au vu des résultats des tableaux 4 et 5, la différence de fertilisation azotée n'a aucun impact statistiquement significatif sur le poids de la paille récoltée. En revanche, une limitation de la quantité d'azote réduit la quantité de grains récoltés (+ 24,9% pour la condition N100/N70).

La condition T1 montre un poids de paille significativement plus important que les conditions témoins N100 et N70 (+15% /N100 et + 22,3% /N70). Le poids de la paille pour les condition T5 et T10 est équivalent à la condition témoin N70.

Concernant le rendement en grains, l'application du produit permet de rétablir des valeurs proches de la condition témoin N100 lorsque le blé est cultivé en condition limitante.

En conclusion, on peut dire que la composition selon l'invention permet, en condition de fertilisation limitante, de garantir un rendement supérieur en paille par rapport aux conditions normales de fertilisation. La composition selon l'invention permet en outre de maintenir le rendement en grain sec sans pour autant constituer une source d'azote complémentaire aux engrais azotés. Par conséquent, la composition selon l'invention, associant un extrait d'algues *Laminaria* et un composé choisi parmi l'acide glutamique ou ses dérivés, permet de maintenir (voire d'améliorer) le rendement de culture en conditions limitantes de fertilisation. La composition agit donc bien comme un stimulateur d'assimilation et du métabolisme de l'azote, ce qui permet de réduire d'au moins 30% la quantité de nitrates déversée dans les sols.

6.4. Deuxième essai comparatif d'efficacité de la composition selon l'invention

Un deuxième essai en conditions contrôlées permet de déterminer le meilleur ratio algues *Laminaria*/composé. Les conditions de culture du blé sont identiques à celles du premier essai. Les formulations de la composition testées sont résumées ci-dessous :

- Condition 1 = Acide glutamique (Glu) seul à la dose de 0,15g/L
- Condition 2 = Solution d'algues *Laminaria* seule à la dose de 1% (v/v)
- Condition 3 = Acide glutamique (Glu) 0,15g/L + solution d'algues *Laminaria* 1% (v/v)

Dans chaque condition, les adjuvants Deschofix CO125 et BYK 349 sont ajoutés respectivement aux doses finales de 0,3 g/L et 0,225 g/L. Une solution nutritive sans azote (engrais liquide Plantin Liquiplant) est apportée goutte à goutte en continu avec l'arrosage. La solution d'algues *Laminaria* est une solution aqueuse d'algues *Laminaria digitata* comprenant environ 45% en poids d'algues et environ 55% en poids d'eau.

Les essais ont été menés en France, sur un substrat Faliénor sans prémix, dépourvu d'azote (concentration en azote = 0). La plante cultivée est du blé tendre d'hiver (variété Premio). Les plants ont été cultivés en pot à une densité de 100 plants/m2. Les produits sont appliqués au débit du tallage, au stade épis = 1 cm et au début de la floraison du blé. Chaque produit est appliqué en un volume de 250 ml pour 5 plants et par condition. L'azote est apporté par une solution d'ammonitrate à 28% d'azote à raison de 210 unités par ha (dose complète de fertilisation). Les parties aériennes (PF) des plantes sont récoltées puis pesées. La figure 1 présente les résultats de cet essai avec le poids des parties aériennes des plantes (en mg par plant) en ordonnée, et les conditions en abscisse. Comme on peut le voir sur la figure 1, on peut constater que l'acide glutamique et les algues sont tous les deux actifs pour toutes les doses testées. Cependant, les combinaisons de glutamate et d'algues permettent d'obtenir des résultats supérieurs aux doses de chaque principe actif utilisé séparément. L'acide glutamique et l'algue du genre *Laminaria* fonctionnent donc en synergie. La composition selon l'invention permet donc d'améliorer le tallage des plantes traitées.

Il est à noter que, dans cet exemple, la dose d'acide glutamique n'est d'environ que de 30 g/ha ce qui est négligeable par rapport aux normes de fertilisation en vigueur d'environ 30 à 300 kg d'azote/ha.

6.5. Démonstration du mode d'action de la composition concentrée selon l'invention

Des essais destinés à mettre en évidence le mode d'action de la composition selon l'invention ont été menés sur le modèle *Arabidopsis thaliana,* qui est un modèle classique de recherche génétique en biologie végétale. Après levée de dormance et synchronisation de la germination, les plantes sont cultivées en chambre climatique, maintenue à une température de 22°C le jour et 19°C la nuit, avec une héméropériode de 16h.

Deux conditions sont testées :

- témoin= eau + Deschofix CO125 à 0,3 g/L + BYK 349 à 0,225 g/L ;
- test = composition selon l'invention comprenant 1% de solution d'algues *Laminaria digitata* et 0,15 g/L de composé + Deschofix CO125 à 0,3 g/L + BYK 349 à 0,225 g/L.

La solution d'algues est une solution aqueuse d'algues *Laminaria digitata* comprenant environ 45% en poids d'algues et environ 55% en poids d'eau, comme expliqué précédemment. Chaque composition est administrée par pulvérisation foliaire une fois par jour. Les feuilles sont prélevées 48h après traitement et placées dans un RNA later RNA Stabilization Reagent (Qiagen). Les tissus sont broyés dans une solution Tissue lyser (Qiagen). L'extraction des ARN totaux est effectuée avec le kit RNesasy protect mini kit avec un traitement à la DNAse I (Qiagen), conformément aux instructions du protocole du fournisseur. Une étape de rétrotranscription est réalisée en présence d'un oligodT couplé au promoteur de la T7 polymérase, de dCTP-Cy3 ou Cy5. Les produits de rétrotranscription sont ensuite purifiés avant la quantification. L'étape de quantification se fait sur une micropuce à ADN (Lames CATMAv7, Agilent Technology). L'hybridation (30 pmoles / échantillon/ lame) est réalisée à 42°C toute la nuit en présence de formamide. Après analyse statistique des résultats bruts, une liste de gènes par comparaison au témoin (technique du dye-swap) est produite.

**Tableau 6 - Sélection des gènes induits statistiquement significatifs**

| AGI | Nom du gène | Facteur d'induction par rapport au témoin |
|---|---|---|
| A T3G45060 | "ATNRT2.6 (Arabidopsis thaliana high affinity nitrate transporter 2.6); nitrate transporter" | 4,12* |
| A T3G44300 | "NIT2 (NITRILASE 2)" | 3,91* |
| AT5G11210 | "ATGLR2.5 (Arabidopsis thaliana glutamate receptor 2.5)" | 1,04 |
| AT5G48410 | "ATGLR1.3 (Arabidopsis thaliana glutamate receptor 1.3)" | 1,10 |
| AT1G74590 | "ATGSTU10 (Arabidopsis thaliana Glutathione S-transferase (class tau) 10); glutathione transferase" | 2,82* |
| AT5G62480 | "ATGSTU9 (GLUTATHIONE S-TRANSFERASE TAU 9); glutathione transferase" | 2,44* |
| AT5G64260 | "phosphate-responsive protein, putative" | 1,45* |
| AT5G09440 | "phosphate-responsive protein, putative" | 1,11 |

L'astérisque signale les résultats significatifs statistiquement (p<0,05). D'après les résultats, les gènes AT3G45060, AT3G44300, AT5G11210, AT5G48410, AT1G74590, AT5G62480, AT5G64260, et AT5G09440 sont les gènes qui sont stimulés par la composition selon l'invention. Ces gènes codent pour des protéines impliquées dans l'assimilation, le transport de l'azote et la croissance végétale.

Par conséquent, la composition selon l'invention agit directement sur les gènes des cellules végétales pour stimuler l'assimilation et la croissance végétale. L'association des algues *Laminaria* et du composé d'acide glutamique/glutamate permet bien de stimuler le métabolisme azoté et favorise ainsi la croissance végétale.

6.6. Essais en champs de la composition selon l'invention sur blé en condition de fertilisation complète

Des essais en champs pour déterminer l'efficacité de la composition selon l'invention à grande échelle ont été menés. Les mesures ont été faites sur deux parcelles à chaque fois, deux années consécutives. Le blé utilisé est du blé tendre d'hiver (variété Premio). Un volume de 2L de composition concentrée telle que décrite au §6.1 est dilué dans une cuve de 200L d'eau pour pulvérisation. La concentration en glutamate est donc de 0,15g/L et la concentration en solution d'algues *Laminaria* est de 1%. Le témoin utilisé est de l'eau. Chaque condition comprend, outre le produit pulvérisé directement sur le feuillage, un apport au sol de 210 unités d'azote apportées par une solution d'ammonitrate à 28% d'azote. La solution d'algues est une solution aqueuse d'algues *Laminaria digitata* comprenant environ 45% en poids d'algues et environ 55% en poids d'eau.

Les parcelles testées ont soit un sol du type limon sablo-argileux, soit un sol du type argilo-calcaire peu profond. Les résultats sont résumés dans le tableau 7 ci dessous :

**Tableau 7 - Efficacité moyenne de la composition selon l'invention, en pourcentage du témoin**

| Condition | Nombre de talles/mètre linéaire | Rendement sec en q/ha | Taux de protéines des grains en % | Poids de mille grains (en g) | poids spécifique en kg/hl |
|---|---|---|---|---|---|
| Témoin | 48.2 (33.4 - 55.8) | 80.9 (69.4 - 86.4) | 10.1 (8.9 - 11.6) | 48.8 (44.8 - 56.4) | 76.2 (73.9 - 80.0) |

(suite)

| Condition | Nombre de talles/mètre linéaire | Rendement sec en q/ha | Taux de protéines des grains en % | Poids de mille grains (en g) | poids spécifique en kg/hl |
|---|---|---|---|---|---|
| Composition | 117 (111 - 131) | 108 (105 - 110) | 102 (101 - 105) | 102 (97 - 104) | 102 (101 - 102) |

Les valeurs indiquées pour le témoin sont des valeurs brutes. Les valeurs indiquées pour la composition sont des valeurs relatives au témoin (témoin = base 100). Les valeurs indiquées pour la composition représentent le rapport composition/témoin. Les valeurs indiquées entre parenthèses correspondent aux valeurs extrêmes.

Comme on peut l'observer dans le tableau 7 ci-dessus, la composition selon l'invention permet d'augmenter le tallage du blé de 17% en moyenne, le rendement sec d'environ 8%, le taux de protéines, le poids de 1000 grains et le poids spécifique de 2% en moyenne.

6.7. Essais en champs de la composition selon l'invention sur blé et colza en condition de fertilisation limitante

Les conditions expérimentales de cet essai sont identiques à l'essai décrit au §6.6 si ce n'est que la quantité d'azote administrée au témoin N70 et à la condition composition est réduite de 30% (174 Unités d'azote) et que l'essai a été fait sur une parcelle de type limon sablo-argileux. Les plantes utilisées pour cette expérience sont le blé tendre d'hiver (variété Premio) et le colza. Trois conditions ont été testées :

- Témoin N100= eau + Deschofix CO125 à 0,3 g/L + BYK 349 à 0,225 g/L ;
- Témoin N70 = eau + Deschofix CO125 à 0,3 g/L + BYK 349 à 0,225 g/L ;
- Composition = composition selon l'invention comprenant 1% d'extrait d'algues *Laminaria digitata* et 0,15 g/L de composé + Deschofix CO125 à 0,3 g/L + BYK 349 à 0,225 g/L;
- Le témoin N100 est fertilisé avec 210 unités d'azote, le témoin N70 et la condition « N70 + Composition » sont fertilisés avec 174 unités d'azote. Les rendements en grains moyens, mesurés en quintal/hectare (q/ha), sont indiqués dans le tableau ci dessous.

**Tableau 8 - Résultats des essais sur blé et colza en conditions limitantes**

| Condition | Rendement en grains moyen (q/ha) | |
|---|---|---|
| | Blé | Colza |
| Témoin N100 | 92,12 (2,51) | 38,36 (2,07) |
| Témoin N70 | 75,88 (6,87) | 33,98 (3,87) |
| N70 + Composition | 89,38 (3,66) | 38,41 (1,02) |

Les valeurs entre parenthèses correspondent aux écart-types. Les résultats correspondent aux valeurs brutes de mesure.

Comme on peut le constater, les plantes cultivées en condition limitante de fertilisation (N70) présentent un rendement sec en grains réduit par rapport à la condition témoin en fertilisation complète, ce qui valide le modèle. L'administration de la composition en fertilisation limitante permet de rétablir les rendements, aussi bien pour le blé que pour le colza.

**7. Conclusion**

La composition selon l'invention, qu'elle soit sous forme diluée pour être prête à l'emploi ou concentrée, permet donc de stimuler l'assimilation et le métabolisme de l'azote dans les végétaux. Les inventeurs ont ainsi démontré que l'association d'un extrait d'algues du genre *Laminaria* avec un composé choisi parmi l'acide glutamique ou ses dérivés permet d'améliorer la croissance végétale et ainsi les différents rendements agricoles.

La composition selon l'invention permet en conditions de fertilisation complète d'augmenter les rendements de récolte jusqu'à 10%. La composition permet en outre de maintenir un rendement et une qualité des grains identiques en réduisant la quantité d'azote administrée aux plantes de 30%.

Par conséquent, la composition selon l'invention permet de réduire la pollution liée à l'utilisation d'engrais azotés ainsi que les coûts d'exploitation agricole en permettant à la plante de mieux assimiler et de mieux utiliser l'azote qui lui est prodigué.

De plus, la composition selon l'invention n'est pas un fertilisant ni une source naturelle d'engrais. La composition selon l'invention ne peut pas être utilisée dans un but de fertilisation. En effet, la composition comprend non seulement trop peu d'azote pour agir comme fertilisant, mais l'azote se trouve en outre dans une forme qui n'est pas utilisée dans les fertilisants sur le marché.

La composition selon l'invention allie deux principes actifs, dans des proportions particulières, permettant d'agir sur la régulation des gènes impliqués dans les voies métaboliques de l'azote dans un végétal.

## Revendications

1. Composition concentrée destinée à un usage agricole, pour stimuler le métabolisme azoté des plantes cultivées, comprenant :

   - un composé choisi dans le groupe comprenant l'acide glutamique, un de ses hydrates, un de ses énantiomères, un de ses sels, et leurs combinaisons ;
   - de l'algue du genre *Laminaria* ;

   ladite algue du genre *Laminaria* et ledit composé étant présents respectivement dans un ratio massique compris entre 11,25 :1 et 45 :1.

2. Composition concentrée selon la revendication 1, dans laquelle l'algue du genre *Laminaria* et ledit composé sont présents respectivement dans un ratio massique compris entre 18:1 et 38,25:1 ; préférentiellement dans un ratio massique égal à 45:1,5.

3. Composition concentrée selon l'une des revendications précédentes, comprenant une proportion massique dudit composé comprise entre 0,01% et 20% ; préférentiellement entre 0,1% et 10% ; très préférentiellement entre 0,5% et 5% ; et encore plus préférentiellement 1,5% par rapport au poids total de la composition concentrée.

4. Composition concentrée selon l'une des revendications précédentes, dans laquelle ledit composé est choisi parmi l'acide glutamique D, l'acide glutamique L, le glutamate monosodique, ou leur mélanges; préférentiellement l'acide glutamique.

5. Composition concentrée selon l'une des revendications précédentes comprenant une proportion massique d'algue du genre *Laminaria* comprise entre 4,5% et 50%; alternativement entre 15% et 50% ; préférentiellement entre 25% et 50% ; très préférentiellement entre 35% et 50% ; encore plus préférentiellement entre 40% et 45% ; le plus préférentiellement 42,2% par rapport au poids total de la composition concentrée.

6. Composition concentrée selon l'une des revendications précédentes, dans laquelle l'algue du genre *Laminaria* est choisi parmi les espèces *Laminaria abyssali, Laminaria agardhii, Laminaria andersonii, Laminaria angustata, Laminaria belvisii, Laminaria biruncinata, Laminaria bongardiana, Laminaria bracteata, Laminaria brasiliensis, Laminaria brongardiana, Laminaria bullata, Laminaria cichorioides, Laminaria complanata, Laminaria conica, Laminaria coriacea, Laminaria cornea, Laminaria crassifolia, Laminaria diabolica, Laminaria digitata, Laminaria discolor, Laminaria ephemera, Laminaria farlowii, Laminaria fissilis, Laminaria flagellum, Laminaria flexicaulis, Laminaria gunneri, Laminaria hyperborea, Laminaria japonica, Laminaria lamourouxii, Laminaria leptopoda, Laminaria longicruris, Laminaria longipedalis, Laminaria longipes, Laminaria longissima, Laminaria lyrata, Laminaria nigripes, Laminaria ochotensis, Laminaria ochroleuca, Laminaria ophiura, Laminaria pallida, Laminaria palmata, Laminaria papyrina, Laminaria platymeris, Laminaria polyphylla, Laminaria pseudodigitata, Laminaria punctata, Laminaria religosa, Laminaria remotifolia, Laminaria repens, Laminaria rodriguezi, Laminaria ruprechtiana, Laminaria ruprechtii, Laminaria saccharina, Laminaria sachalinensis, Laminaria sarniensis, Laminaria setchellii, Laminaria sinclairii, Laminaria solidungula, Laminaria taeniata, Laminaria turneri, Laminaria viridissima, Laminaria vittata, Laminaria yendoana, Laminaria yezoensis* ou leurs combinaisons; préférentiellement l'algue est choisie parmi les espèces *Laminaria digitata, Laminaria hyperborea, Laminaria japonica, Laminaria saccharina* ou leurs combinaisons; très préférentiellement l'algue appartient à l'espèce *Laminaria digitata.*

7. Composition concentrée selon l'une des revendications précédentes comprenant en outre au moins un agent conservateur.

**8.** Composition concentrée selon l'une des revendications précédentes, comprenant en outre un adjuvant; préférentiellement un adjuvant choisi parmi un agent gélifiant, un agent dispersant, un tensio-actif ou leur combinaisons.

**9.** Composition prête à l'emploi, pour un usage agricole, pour stimuler le métabolisme azoté des plantes cultivées, ladite composition comprenant :

- 0.0001% à 1% en poids d'un composé choisi dans le groupe comprenant l'acide glutamique, un de ses hydrates, un de ses énantiomères, un de ses sels, et leurs combinaisons, par rapport au poids total de la composition prête à l'emploi ;
- 0.045% à 5% en poids des l'algue du genre *Laminaria,* par rapport au poids total de la composition prête à l'emploi;
- au moins un agent conservateur,

lesdites algues du genre *Laminaria* et ledit composé étant présents respectivement dans un ratio massique compris entre 11,25 :1 et 45 :1.

**10.** Procédé de traitement des plantes cultivées, pour stimuler leur métabolisme azoté, comprenant les étapes suivantes :

- fourniture d'une composition concentrée selon l'une des revendications 1 à 8 ;
- dilution de ladite composition concentrée dans un milieu aqueux selon un taux de dilution compris entre 0,05% et 10%, préférentiellement entre 0,1% et 4% ; très préférentiellement entre 0,4% et 2% ; et encore plus préférentiellement de 1% par rapport au volume total de la composition diluée;
- pulvérisation de ladite composition diluée sur lesdites plantes par voie aérienne.

**11.** Procédé selon la revendication 11, en ce que les plantes à traiter sont les plantes choisies parmi les céréales à paille, le maïs, le riz, le colza, la pomme de terre, la betterave, le tournesol, la vigne, les arbres fruitiers, les légumes feuilles, les fruits, les légumes racines, une prairie, du gazon ; préférentiellement les plantes à traiter sont les plantes choisies parmi le blé ou le colza.

**12.** Procédé selon la revendication 12, en ce que l'étape de pulvérisation est effectuée aux stades 29, 30 et 61 selon l'échelle BBCH lorsque la plante à traiter est le blé; ou au stade 55 selon l'échelle BBCH lorsque la plante à traiter est le colza.

**13.** Utilisation (1) d'algues du genre *Laminaria* et (2) d'acide glutamique, d'un de ses hydrates, d'un de ses énantiomères, d'un de ses sels, et de leurs combinaisons, ou d'une composition les comprenant, pour stimuler le métabolisme azoté des plantes cultivées.

**14.** Utilisation d'une composition concentrée selon l'une des revendications 1 à 8, qui à l'état prêt à l'utilisation, diluée dans un milieu aqueux, est destinée à augmenter le rendement de récolte.

**15.** Utilisation selon la revendication 14 selon laquelle ladite composition concentrée est diluée dans ledit milieu aqueux à un taux de dilution compris entre 0,05% et 10%, préférentiellement entre 0,1% et 4% ; très préférentiellement entre 0,4% et 2% ; et encore plus préférentiellement 1% par rapport au volume total de la composition diluée.

**Patentansprüche**

**1.** Konzentrierte Zusammensetzung, bestimmt für den landwirtschaftlichen Einsatz, zum Stimulieren des Stickstoffstoffwechsels von Kulturpflanzen, umfassend:

- eine Verbindung, ausgewählt aus der Gruppe umfassend Glutaminsäure, eines ihrer Hydrate, eines ihrer Enantiomere, eines ihrer Salze und Kombinationen davon;
- Algen der Gattung *Laminaria ;*

wobei die Algen der Gattung *Laminaria* und die Verbindung jeweils in einem Massenverhältnis zwischen 11,25:1 und 45:1 vorliegen.

2. Konzentrierte Zusammensetzung gemäß Anspruch 1, wobei die Algen der Gattung *Laminaria* und die Verbindung jeweils in einem Massenverhältnis zwischen 18:1 und 38,25:1; vorzugsweise in einem Massenverhältnis gleich 45:1,5 vorliegen.

3. Konzentrierte Zusammensetzung gemäß einem der vorangehenden Ansprüche, umfassend einen Massenanteil der Verbindung zwischen 0,01% und 20%; vorzugsweise zwischen 0,1% und 10%; stärker bevorzugt zwischen 0,5% und 5%; und noch stärker bevorzugt 1,5%, bezogen auf das Gesamtgewicht der konzentrierten Zusammensetzung.

4. Konzentrierte Zusammensetzung gemäß einem der vorangehenden Ansprüche, wobei die Verbindung aus D-Glutaminsäure, L-Glutaminsäure, Mononatriumglutamat oder Mischungen davon; vorzugsweise bevorzugt Glutaminsäure ausgewählt ist.

5. Konzentrierte Zusammensetzung gemäß einem der vorangehenden Ansprüche, umfassend einen Massenanteil von Algen der Gattung *Laminaria* zwischen 4,5% und 50%; alternativ zwischen 15% und 50%; vorzugsweise zwischen 25% und 50%; stärker bevorzugt zwischen 35% und 50%; noch stärker bevorzugt zwischen 40% und 45%; am meisten bevorzugt 42,2%, bezogen auf das Gesamtgewicht der konzentrierten Zusammensetzung.

6. Konzentrierte Zusammensetzung gemäß einem der vorangehenden Ansprüche, in der die Alge der Gattung *Laminaria* ausgewählt ist unter den Spezies *Laminaria abyssali, Laminaria agardhii, Laminaria andersonii, Laminaria angustata, Laminaria belvisii, Laminaria biruncinata, Laminaria bongardiana, Laminaria bracteata, Laminaria brasiliensis, Laminaria brongardiana, Laminaria bullata, Laminaria cichorioides, Laminaria complanata, Laminaria conica, Laminaria coriacea, Laminaria cornea, Laminaria crassifolia, Laminaria diabolica, Laminaria digitata, Laminaria discolor, Laminaria ephemera, Laminaria farlowii, Laminaria fissilis, Laminaria flagellum, Laminaria flexicaulis, Laminaria gunneri, Laminaria hyperborea, Laminaria japonica, Laminaria lamourouxii, Laminaria leptopoda, Laminaria longicruris, Laminaria longipedalis, Laminaria longipes, Laminaria longissima, Laminaria lyrata, Laminaria nigripes, Laminaria ochotensis, Laminaria ochroleuca, Laminaria ophiura, Laminaria pallida, Laminaria palmata, Laminaria papyrina, Laminaria platymeris, Laminaria polyphylla, Laminaria pseudodigitata, Laminaria punctata, Laminaria religosa, Laminaria remotifolia, Laminaria repens, Laminaria rodriguezi, Laminaria ruprechtiana, Laminaria ruprechtii, Laminaria saccharina, Laminaria sachalinensis, Laminaria sarniensis, Laminaria setchellii, Laminaria sinclairii, Laminaria solidungula, Laminaria taeniata, Laminaria turneri, Laminaria viridissima, Laminaria vittata, Laminaria yendoana, Laminaria yezoensis* oder ihren Kombinationen; wobei die Alge vorzugsweise aus den Spezies *Laminaria digitata, Laminaria hyperborea, Laminaria japonica, Laminaria saccharina* oder deren Kombinationen ausgewählt ist; stärker bevorzugt gehört die Alge zur Spezies *Laminaria digitata.*

7. Konzentrierte Zusammensetzung gemäß einem der vorangehenden Ansprüche, ferner umfassend mindestens ein Konservierungsmittel.

8. Konzentrierte Zusammensetzung gemäß einem der vorangehenden Ansprüche, ferner umfassend einen Hilfsstoff; vorzugsweise einen Hilfsstoff, ausgewählt aus einem Geliermittel, einem Dispergiermittel, einem Tensid oder Kombinationen davon.

9. Gebrauchsfertige Zusammensetzung zum landwirtschaftlichen Einsatz zum Stimulieren des Stickstoffstoffwechsels von Kulturpflanzen, wobei die Zusammensetzung umfasst:

- 0,0001% bis 1 Gew.-% einer Verbindung ausgewählt aus der Gruppe umfassend Glutaminsäure, eines ihrer Hydrate, eines ihrer Enantiomere, eines ihrer Salze und Kombinationen davon, bezogen auf das Gesamtgewicht der gebrauchsfertigen Zusammensetzung;
- 0,045 bis 5 Gew.-% Algen der Gattung *Laminaria,* bezogen auf das Gesamtgewicht der gebrauchsfertigen Zusammensetzung;
- mindestens ein Konservierungsmittel,

wobei die Algen der Gattung *Laminaria* und die Verbindung jeweils in einem Massenverhältnis zwischen 11,25:1 und 45:1 vorliegen.

10. Verfahren zur Behandlung von Kulturpflanzen zum Stimulieren ihres Stickstoffstoffwechsels, umfassend die folgenden Schritte:

- Bereitstellen einer konzentrierten Zusammensetzung gemäß einem der Ansprüche 1 bis 8;
- Verdünnen der konzentrierten Zusammensetzung in einem wässrigen Medium bei einem Verdünnungsverhältnis zwischen 0,05% und 10%, vorzugsweise zwischen 0,1% und 4%; stärker bevorzugt zwischen 0,4% und 2%; und noch stärker bevorzugt von 1%, bezogen auf das Gesamtvolumen der verdünnten Zusammensetzung;
- Versprühen der verdünnten Zusammensetzung auf den Pflanzen durch Verteilung aus der Luft.

11. Verfahren gemäß Anspruch 11, dadurch, dass es sich bei den zu behandelnden Pflanzen um Pflanzen handelt, die ausgewählt sind aus Halmgetreide, Mais, Reis, Raps, Kartoffeln, Rote Beete, Sonnenblumen, Weinrebe, Obstbäumen, Blattgemüse, Obst, Wurzelgemüse, Wiese, Rasen; wobei die zu behandelnden Pflanzen vorzugsweise Pflanzen sind, die aus Weizen oder Raps ausgewählt sind.

12. Verfahren gemäß Anspruch 12, dadurch, dass der Sprühschritt in den Stadien 29, 30 und 61 gemäß der BBCH-Skala durchgeführt wird, wenn die zu behandelnde Pflanze Weizen ist; oder im Stadium 55 auf der BBCH-Skala, wenn die zu behandelnde Pflanze Raps ist.

13. Verwendung (1) von Algen der Spezies *Laminaria* und (2) von Glutaminsäure, einem ihrer Hydrate, einem ihrer Enantiomere, einem ihrer Salze und Kombinationen davon, oder einer Zusammensetzung, die diese umfasst, um den Stickstoffstoffwechsel von Kulturpflanzen zu stimulieren.

14. Verwendung einer konzentrierten Zusammensetzung gemäß einem der Ansprüche 1 bis 8, die im gebrauchsfertigen Zustand, verdünnt in einem wässrigen Medium, zum Erhöhen des Ernteertrags vorgesehen ist.

15. Verwendung gemäß Anspruch 14, wobei die konzentrierte Zusammensetzung in dem wässrigen Medium bei einem Verdünnungsverhältnis zwischen 0,05% und 10%, vorzugsweise zwischen 0,1% und 4%; stärker bevorzugt zwischen 0,4% und 2%; und noch stärker bevorzugt 1%, bezogen auf das Gesamtvolumen der verdünnten Zusammensetzung, verdünnt wird.

**Claims**

1. Concentrated composition intended for agricultural use, for stimulating the nitrogen metabolism of cultivated plants, comprising:

   - a compound chosen from the group comprising glutamic acid, one of its hydrates, one of its enantiomers, one of its salts, and combinations thereof;
   - a seaweed of the genus *Laminaria;*

   said seaweed of the genus *Laminaria* and said compound being present respectively in a mass ratio between 11.25:1 and 45:1.

2. Concentrated composition according to claim 1, in which the seaweed of the genus *Laminaria* and said compound are present respectively in a mass ratio between 18:1 and 38.25:1; preferably in a mass ratio equal to 45:1.5.

3. Concentrated composition according to one of the preceding claims, comprising a proportion by weight of said compound between 0.01% and 20%; preferably between 0.1% and 10%; very preferably between 0.5% and 5%; and even more preferably 1.5% relative to the total weight of the concentrated composition.

4. Concentrated composition according to one of the preceding claims, in which said compound is chosen from D-glutamic acid, L-glutamic acid, sodium glutamate or mixtures thereof; preferably preferably glutamic acid.

5. Concentrated composition according to one of the preceding claims, comprising a proportion by weight of seaweed of the genus *Laminaria* between 4.5% and 50%; alternatively between 15% and 50%; preferably between 25% and 50%; very preferably between 35% and 50%; even more preferably between 40% and 45%; most preferably 42.2% relative to the total weight of the concentrated composition.

6. Concentrated composition according to one of the preceding claims, in which the seaweed of the genus *Laminaria* is chosen from the species *Laminaria abyssali, Laminaria agardhii, Laminaria andersonii, Laminaria angustata, Laminaria belvisii, Laminaria biruncinata, Laminaria bongardiana, Laminaria bracteata, Laminaria brasiliensis, Lam-*

**EP 3 066 925 B1**

*inaria brongardiana, Laminaria bullata, Laminaria cichorioides, Laminaria complanata, Laminaria conica, Laminaria coriacea, Laminaria cornea, Laminaria crassifolia, Laminaria diabolica, Laminaria digitata, Laminaria discolor, Laminaria ephemera, Laminaria farlowii, Laminaria fissilis, Laminaria flagellum, Laminaria flexicaulis, Laminaria gunneri, Laminaria hyperborea, Laminaria japonica, Laminaria lamourouxii, Laminaria leptopoda, Laminaria longicruris, Laminaria longipedalis, Laminaria longipes, Laminaria longissima, Laminaria lyrata, Laminaria nigripes, Laminaria ochotensis, Laminaria ochroleuca, Laminaria ophiura, Laminaria pallida, Laminaria palmata, Laminaria papyrina, Laminaria platymeris, Laminaria polyphylla, Laminaria pseudodigitata, Laminaria punctata, Laminaria religosa, Laminaria remotifolia, Laminaria repens, Laminaria rodriguezi, Laminaria ruprechtiana, Laminaria ruprechtii, Laminaria saccharina, Laminaria sachalinensis, Laminaria sarniensis, Laminaria setchellii, Laminaria sinclairii, Laminaria solidungula, Laminaria taeniata, Laminaria turneri, Laminaria viridissima, Laminaria vittata, Laminaria yendoana, Laminaria yezoensis* or combinations thereof; preferably the seaweed is chosen from the species *Laminaria digitata, Laminaria hyperborea, Laminaria japonica, Laminaria saccharina* or combinations thereof; very preferably the seaweed belongs to the species *Laminaria digitata.*

7.  Concentrated composition according to one of the preceding claims, additionally comprising at least one preserving agent.

8.  Concentrated composition according to one of the preceding claims, additionally comprising an additive; preferably an additive chosen from a gelling agent, a dispersing agent, a surfactant or combinations thereof.

9.  Ready-to-use composition intended for agricultural use, for stimulating the nitrogen metabolism of cultivated plants, comprising:

    - 0.0001% to 1% by weight of a compound chosen from the group comprising glutamic acid, one of its hydrates, one of its enantiomers, one of its salts, and combinations thereof, relative to the total weight of the ready-to-use composition;
    - 0.045% to 5% by weight of seaweed of the genus *Laminaria,* relative to the total weight of the ready-to-use composition;
    - at least one preserving agent,

    said seaweeds of the genus *Laminaria* and said compound being present respectively in a mass ratio between 11.25:1 and 45:1.

10. Method of treating cultivated plants for stimulating their nitrogen metabolism, comprising the following steps:

    - supply of a concentrated composition according to one of claims 1 to 8;
    - dilution of said concentrated composition in an aqueous medium at a dilution rate between 0.05% and 10%, preferably between 0.1% and 4%; very preferably between 0.4% and 2%; and even more preferably 1% relative to the total volume of the diluted composition;
    - spraying of said diluted composition on said plants by aerial means.

11. Method according to claim 11, in which the plants to be treated are plants chosen from straw cereals, maize, rice, rape, potato, beet, sunflower, vine, fruit trees, leafy vegetables, fruits, root vegetables, grassland, lawn; preferably the plants to be treated are plants chosen from wheat or rape.

12. Method according to claim 12, in which the spraying step is carried out at stages 29, 30 and 61 on the BBCH scale when the plant to be treated is wheat; or at stage 55 on the BBCH scale when the plant to be treated is rape.

13. Use (1) of seaweeds of the genus *Laminaria* and (2) of glutamic acid, one of its hydrates, one of its enantiomers, one of its salts, and combinations thereof, or of a composition comprising them, for stimulating the nitrogen metabolism of cultivated plants.

14. Use of a concentrated composition according to one of claims 1 to 8, which in the ready-to-use state, diluted in an aqueous medium, is intended to increase the harvest yield.

15. Use according to claim 14, in which said concentrated composition is diluted in said aqueous medium at a dilution rate between 0.05% and 10%, preferably between 0.1% and 4%; very preferably between 0.4% and 2%; and even more preferably 1% relative to the total volume of the diluted composition.

18

**Fig. 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **U. MEIER.** Stades phénologiques des monocotylédones et dicotylédones cultivées. Blackwell Wissenschafts-Verlag, 2001

- *CHEMICAL ABSTRACTS,* 617-65-2